# EUROPÄISCHE PATENTSCHRIFT

(11) **EP 1 546 576 B1**
(45) Veröffentlichungstag und Bekanntmachung des Hinweises auf die Patenterteilung: **15.11.2006**
(21) Anmeldenummer: 03720273.6
(22) Anmeldetag: 11.04.2003
(51) Int. Cl.: F16H 1/16, H02K 7/08

(54) **GETRIEBE-ANTRIEBSEINHEIT MIT GENEIGTER ANSCHLAGSFLÄCHE**
GEARBOX DRIVE UNIT WITH AN INCLINED STOP SURFACE
UNITE D'ENTRAINEMENT DE BOITE SURFACE DE BUTEE INCLINEE

(30) Priorität: 27.09.2002 DE 10245269
(43) Veröffentlichungstag der Anmeldung: 29.06.2005
(73) Patentinhaber: ROBERT BOSCH GMBH, 70442 Stuttgart (DE)
(72) Erfinder: LOUVEL, Fabian, F-67000 Strasbourg (FR); HUESGES, Mario, 77830 Buehlertal (DE); LIENIG, Andreas, 77815 Buehl (DE); OBERLE, Hans-Juergen, 76437 Rastatt (DE)
(86) Internationale Anmeldenummer: PCT/DE2003/001233
(87) Internationale Veröffentlichungsnummer: WO 2004/031613

(56) Entgegenhaltungen:
- EP-A- 0 023 024
- EP-A- 0 563 410
- DE-A- 2 312 395
- DE-C- 19 520 886
- US-A- 3 549 218

## Beschreibung

### Stand der Technik

Die Erfindung betrifft eine Getriebe-Antriebseinheit, insbesondere zum Verstellen von beweglichen Teilen im Kraftfahrzeug, nach der Gattung des Hauptanspruchs.

Mit der DE 198 545 35 A1 ist eine Antriebsvorrichtung für eine Scheibenwischanlage eines Kraftfahrzeugs bekannte geworden, die ein Gehäuse und eine darin drehbar gelagerte Ankerwelle mit einer Schnecke aufweist. Mittels einer Axialkrafterzeugungseinrichtung wird hierbei ein Keilschieber radial zur Ankerwelle verschoben, um das Axialspiel der Ankerwelle auszugleichen. Die Verschiebekraft des Keilschiebers wird durch ein vorgespanntes Federelement aufgebracht, das den Keilschieber radial gegen einen Anschlag der Ankerwelle drückt, wodurch diese bis zum Ausgleich des Axialspiels axial verschoben wird. Andererseits tritt bei einer starken Belastung der Ankerwelle durch ein Abtriebsrad eine Axialkraft auf, mit der die Ankerwelle gegen den Keilschieber gepresst wird und dieser dabei radial von der Ankerwelle weg gegen das Federelement zurück gedrückt wird. Solch eine starke Dauerbelastung des Federelements führt dazu, dass dessen Lebensdauer, bzw. dessen elastische Eigenschaften nachlassen und daher das Axialspiel der Ankerwelle nicht mehr ausgeglichen wird, so dass sie sich unter Belastung axial hin und her bewegt, was zu unangenehmen Klackgeräuschen führen kann.

Aus der gattungsgemäßen EP v0 563 410 A1 ist ein Keilschieber-System bekannt geworden, mit dem das Axialspiel eines Fensterheberantriebs einstellbar ist. Dabei wird ein an der Rotorwelle axial anliegender Stellkeil mittels einer Spiralfeder entlang einer schrägen Anschlagsfläche derart eingeschoben, dass ein Auftreten des Axialspiels aufgrund von Verschleißerscheinungen ausgeglichen wird. Dabei weist der Keil eine wellenförmige Oberfläche auf, um ein Zurückweichen des Keils zu verhindern.

Die DE-A-23 12 395 zeigt ebenfalls eine elektrische Antriebsvorrichtung, bei der mittels eines radial verschiebbaren Keils eine axiale Kraft auf die Ankerwelle erzeugt werden kann. Der Keil wird hierbei ebenfalls mittels einer Spiralfeder radial verstellt, wobei auch axiale Stöße auf die Ankerwelle gedämpft werden.

In der US-A-3,549,218 wird ein U-förmiger Keil mittels einer an einem Gehäusedeckel befestigten Blattfeder radial gegen eine Ankerwelle gepresst. Der Keil liegt dabei an einer axialen Anlagefläche der Ankerwelle an, um das Ankerlängsspiel auszugleichen.

Mit der DE 195 20 886 C ist ein Schneckengetriebe bekannt geworden, bei dem sich ein Wellenende an einem mehrteiligen keilförmigen Einsatzteil abstützt. Das keilförmige Einsatzteil weist ein abstützendes Teil auf, das an der Gehäusewand anliegt und einen Schiebekeil mit formschlüssig ineinander greifenden Konturen. Der Keil wird hierbei durch eine Spiralfeder radial zur Wellenachse hin eingedrückt.

### Vorteile der Erfindung

Die erfindungsgemäße Getriebe-Antriebseinheit mit den Merkmalen des Hauptanspruchs hat den Vorteil, dass eine Axialkrafterzeugungseinrichtung derart angeordnet wird, dass deren Reibungskoeffizient ein radiales Zurückweichen eines Bauelements, das das Axialspiel ausgleicht, verhindert. Dazu sind die Geometrie, die Oberflächen und die Materialien der Axialkrafterzeugungseinrichtung so gewählt, dass der Reibungskoeffizient zwischen einer um einen Neigungswinkel gegen die Senkrechte der Welle geneigten Anschlagsfläche und der Oberfläche eines Bauelements größer ist, als der Tangens des Neigungswinkel. Dabei wird das Bauteil radial zur Welle hin verschoben, sobald die Welle ein Längsspiel aufweist. Ein Zurückschieben des Bauteils wird jedoch durch die Reibungsbedingung verhindert. Dadurch muss ein elastisches Element, das zum Verschieben des Bauteils verwendet wird, keine hohen Rückstellkräfte aufnehmen, die durch die Welle auf das Bauelement eingeleitet werden. Die Elastizität des elastischen Elements bleibt daher über dessen gesamte Lebensdauer erhalten, wodurch das Längsspiel der Welle über die gesamte Lebensdauer zuverlässig eliminiert wird.
Des weiteren wird hiermit das Wellenlängsspiel eliminiert, ohne dass vorher dieses Längsspiel bei der Montage der Vorrichtung gemessen werden muss, um dieses beispielsweise mittels selektiv montierter Ausgleichsscheiben auszugleichen. Dadurch wird die Anzahl der Stationen im Montageband verringert und die Montagevorrichtung vereinfacht. Die Axialkrafterzeugungseinrichtung kann im Baukastenprinzip gefertigt werden, so das diese mit vielen verschiedene Antriebseinheiten kompatibel ist.

Durch die in den Unteransprüchen angegebenen Maßnahmen sind vorteilhafte Weiterbildungen der Vorrichtung nach dem Hauptanspruch möglich. So wird der Reibungskoeffizient zwischen der Oberfläche des Bauteils und der geneigten Anschlagsfläche besonders günstig durch das Anformen eines Profils an eine der beiden Reibflächen erhöht. Wird beispielsweise ein sägezahnähnliches Profil an mindestens einer der Oberflächen angeformt, so kann das Bauelement mit geringer Kraft radial auf die Welle zu, aber nur unter deutlich höherem Kraftaufwand radial wieder zurück bewegt werden. Eine solche strukturierte Oberfläche führt daher dazu, dass das elastische Element zur Verschiebung des Bauteils nicht übermäßig belastet wird. Das elastische Element kann somit über die gesamte Lebensdauer der Vorrichtung das Bauteil radial nachschieben, um das auftretenden Axialspiels zu eliminieren. Durch das Anformen eines solchen Profils an der Reibfläche zwischen dem Bauteil und der Anschlagsfläche kann der Neigungswinkel der Anschlagsfläche größer gewählt werden, wodurch ein größerer Hub zum Ausgleich des Wellenlängsspiegels zur Verfügung steht.

In einer bevorzugten Ausgestaltung kann einer der beiden Anschlagsflächen oder das Bauelement eine treppenstufenförmige Oberfläche aufweisen, bei der die "Tritt-Flächen" näherungsweise senkrecht zur Längsachse der Welle ausgerichtet sind. Somit wird eine Rückstellkraft des Bauteils radial von der Welle weg beim Einwirken einer Axialkraft von der Welle praktisch vollständig unterbunden. Dies führt dazu, dass auch bei extremen Belastungen der Welle kein Wellenlängsspiel zugelassen wird.

Bildet die geneigte Oberfläche einen Konus, so dass eine Kegelstumpf-Mantelfläche entsteht, wird die Welle auf einer radialsymmetrischen Fläche abgestützt, wodurch die Welle auch unter Belastung sehr exakt radialsymmetrisch zentriert bleibt. Die konusförmige Fläche dient dazu, dass das mindestens eine Bauteil von allen Seiten gleichzeitig gleichmäßig zur Wellenachse hin verschoben werden kann.

Besonders günstig ist es, wenn eine der Anschlagsflächen als ein Teil zusammen mit dem Bauteil ausgeführt ist. Dadurch werden keine zusätzlichen Anlaufelemente benötigt, wodurch der Montageaufwand reduziert wird.

Weist das Bauteil eine U-förmige Gestalt auf, so kann das Bauteil besonders günstig auch für eine durchtauchende Welle angewendet werden. Dabei ist das Bauteil nicht an der Stirnseite einer Welle angeordnet, sondern umgreift die Welle und stützt sich beispielsweise an einem an dieser angefertigten Bund ab. Solch U-förmiges Bauteil ist ebenfalls für die Anwendung einer Welle, die mit einer Anlaufhülse gelagert ist von Vorteil, weil das U-förmiges Bauteil die Anlaufhülse umgreift, um die Baulänge des Antriebs zu reduzieren.

In einer bevorzugten Ausführung ist das Bauteil ringförmig ausgebildet und radial elastisch dehnbar. Dadurch schiebt sich dieses Bauteil aufgrund dessen Vorspannung in den Spalt zwischen den beiden Anschlagsflächen, so dass kein zusätzliches elastisches Element notwendig ist, das das Bauteil mit einer Verschiebekraft beaufschlagt. Wird solch ein als elastisches Ringelement ausgebildetes Bauteil mit einer treppenstufenförmigen Anschlagsfläche, die als Konus ausgebildet ist, gekoppelt, so zieht sich der Federring zusammen, um das durch Verschleißerscheinungen erhöhte Axialspiel wieder auszugleichen. Dabei ist es nicht notwenig, dass sich das elastische Ringelement am Gehäuse abstützt.

Um die Baulänge der Getriebe-Antriebseinheit zu reduzieren, kann das Bauteil in einfacher Weise zwei abgesetzte, separate Keilflächen aufweisen, die über eine Fläche miteinander verbunden sind, die senkrecht zur Wellensachse angeordnet ist. Dabei kann das keilförmige Bauelement im Laufe der Zeit radial gegen die Welle nachgeschoben werden, wobei durch die Reduzierung der Gesamthöhe des Bauteils die Bauhöhe der gesamten Antriebsvorrichtung reduziert wird. Dabei werden die axialen Kräfte der Welle günstiger Weise sehr gleichmäßig über einen großen Durchmesser der Anschlagsfläche aufgenommen.

Die erfindungsgemäße Axialkrafterzeugungseinrichtung kann sowohl an der Stirnseite oder an einem Bund der Welle angeordnet sein, so dass eine hohe Varianz für verschiedene Ausführungen der Getriebe-Antriebseinheit gewährleistet ist.

Weist die Welle eine Schneckenverzahnung auf, die beispielsweise mit einem Schneckenrad kämmt, treten sehr hohe axiale Wellenkräfte auf, wenn beispielsweise ein bewegliches Teil gegen Anschlag gefahren wird. Ebenso können bei einem Spindelantrieb mit einer Gewindeverzahnung der Welle starke Axialkräfte beim Beschleunigen oder Verzögern von beweglichen Teilen auftreten. Das dabei auftretende dynamische Axialspiel wird durch die erfindungsgemäße Vorrichtung zuverlässig und langfristig ausgeglichen.

Von Vorteil ist es, wenn das Bauteil ständig durch eine Verschiebekraft nachgeführt wird, die von einem vorgespannten elastischen Element aufgebracht wird. Die gespeicherte Energie des Federelements führt dazu, dass ein solcher selbsteinstellender Axialspielausgleich über die gesamte Lebensdauer der Getriebe-Antriebseinheit das Bauteil mit ausreichender Kraft gegen die Welle drückt.

Für die Montage ist es besonders günstig, wenn das vormontierte elastische Element direkt mit dem Befestigen des Deckels des Getriebegehäuses vorgespannt wird. Durch die radiale Montage des elastischen Elements sind hierzu keine weiteren Hilfswerkzeuge notwendig.

Verfahrenstechnisch noch günstiger ist es, wenn das elastische Element entweder als integraler Teil des Deckels des Getriebegehäuses öder des Bauteils ausgeführt ist, da hierdurch das elastische Element bei der Montage des Bauteils bzw. des Getriebegehäusedeckels direkt exakt positioniert wird und die Montage durch die Reduzierung der Bauteile vereinfacht wird.

Ist das Bauteil einteilig mit dem elastischen Element ausgebildet, kann dieses beispielsweise aus einer Blattfeder geformt werden. Damit die keilförmig ausgebildete Blattfeder an ihren Stirnflächen höhere axiale Kräfte aufnehmen kann, ist diese im Bereich der einwirkenden Axialkraft aus Stabilitätsgründen gewellt ausgeführt. Die freien Enden der Blattfeder stützen das Bauteil dabei gleichzeitig gegen das Getriebegehäuse ab, um das Bauteil senkrecht zur Wellenlängsachse hin nachzuführen. Dabei ist das Bauteil zusammen mit dem elastischen Element sehr kostengünstig als Biege-Stanz-Teil zu fertigen.

Durch Sägezahnprofil kann der Neigungswinkel der Anschlagsfläche vergrößert werden, wodurch ein größerer Hub zum Ausgleich des Wellenlängsspiegels zur Verfügung steht.

### Zeichnung

In der Zeichnung sind Ausführungsbeispiele einer erfindungsgemäßen Vorrichtung dargestellt und in der nachfolgenden Beschreibung näher erläutert.

Es zeigen:
Figur 1 ein Ausführungsbeispiel einer Getriebe-Antriebseinheit im Schnitt,
Figur 2 eine schematische Darstellung der auftretenden Kräfte gemäß Figur 1,
Figur 3 ein vergrößerter Ausschnitt eines weiteren Ausführungsbeispiels gemäß Figur 1,
Figur 4 ein weiteres Ausführungsbeispiel bei der Montage des Bauteils,
Figur 5a und Figur 5b eine Seitenansicht und eine Draufsicht des Bauteils aus Figur 4,
Figur 6a und Figur 6b eine Seitenansicht und eine Draufsicht eines weiteren Bauelements,
Figur 7 ein weiteres Ausführungsbeispiel eines Tauchspindelantriebs,
Figur 8 die Montage des Bauelements gemäß Figur 7 im Schnitt ,
Figur 9a und Figur 9b eine Seitenansicht und eine Draufsicht eines weiteren Bauelements gemäß Figur 8,
Figur 10a bis Figur 10c verschiedene Schnitte einer Getriebe-Antriebseinheit mit Anlaufhülse und
Figur 11 einen Schnitt eines weiteren Ausführungsbeispiels mit einem treppenstufenförmigen Konus als Anschlagsfläche.

### Beschreibung der Ausführungsbeispiele

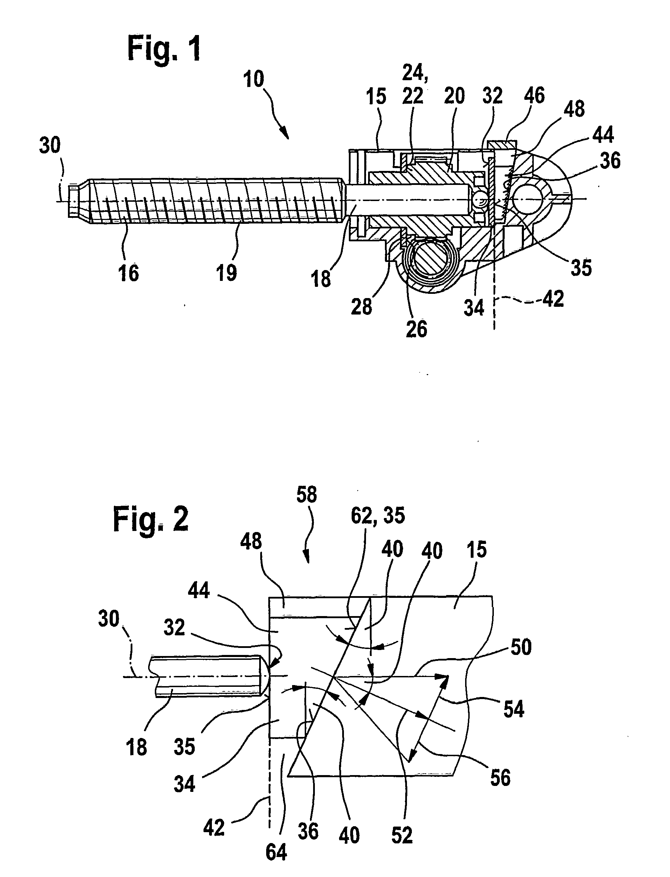

Das in Figur 1 dargestellte Ausführungsbeispiel zeigt eine erfindungsgemäße Getriebe-Antriebseinheit 10 im Schnitt, bei der ein nicht näher dargestellter Elektromotor 12 über ein Schneckengetriebe 14 eine als Spindel 16 ausgeführte Welle 18 antreibt, die aus dem Getriebegehäuse 15 des Schneckengetriebes 14 ragt. Auf der Welle 18 ist ein Schneckenrad 20 eingeformt, das einen Bund 22 aufweist. Dieser Bund 22 bildet eine erste Anlauffläche 24, die sich an einer Gegenanlauffläche 26 einer Anlaufscheibe 28 abstützt, die am Getriebegehäuse 15 anliegt. Die entlang einer Längsachse 30 gelagerte Welle 18 stützt sich mit einer Stirnseite 32 an einem weiteren stirnseitigen Anlaufelement 34 ab, das auf der von der Stirnseite 32 abgewandten Seite eine Anschlagsfläche 35 aufweist. Am Getriebegehäuse 15 ist eine weitere Anschlagsfläche 36 ausgebildet, die um einen Neigungswinkel 40 die gegenüber einer zur Längsachse 30 senkrechten Ebene 42 geneigt ist. Zwischen der schrägen Anlaufsfläche 36 und der Anschlagsfläche 35 der stirnseitigen Anlaufscheibe 34 ist in einem Spalt 64 ein Bauteil 44 angeordnet, das zur Eliminierung des Wellenlängsspiels senkrecht zur Längsachse 30 verschiebbar ist. Im Ausführungsbeispiel ist das Bauteil 44 keilförmig ausgebildet, so dass der Keilwinkel dem Neigungswinkel 40 der geneigten Anschlagsfläche 36 entspricht. Zwischen dem Bauteil 44 und einem Gehäuseteil 46 ist ein elastisches Element 48 angeordnet, das das Bauteil 44 radial gegen die Längsachse 30 in den Spalt 64 hinein drückt.

Das Wirkungsprinzip dieser Axialkrafterzeugungseinrichtung ist schematisch in Figur 2 dargestellt. Das Anlaufelement 34 ist hierbei einteilig mit dem Bauteil 44 ausgebildet, so dass die Anschlagsfläche 35 direkt von der Stirnseite 32 der Welle 32 gebildet wird. Bei Belastung der Welle 18 wirkt eine Axialkraft 50 entlang der Längsachse 30 auf das Bauteil 44 das diese Axialkraft 50 auf die Anschlagsfläche 36 weiterleitet. An der geneigten Anschlagsfläche 36 resultiert aus der Axialkraft 50 eine Normalkraft 52 senkrecht zur Anschlagsfläche 36 und eine Hangabtriebskraft 54 parallel zur Anschlagsfläche 36, die das keilförmige Bauteil 44 gegen das elastische Element 48 aus dem Spalt 64 zwischen Welle 18 und Anschlagsfläche 36 zurück schiebt. Der Hangabtriebskraft 54 entgegen wirkt eine Reibkraft 56, die beim Verschieben des Bauteils 44 gegenüber der Anschlagsfläche 36 erzeugt wird. Um zu verhindern, dass bei einer starken axialen Belastung der Welle die Axialkraft 50 das Bauteil 44 entgegen einer vom elastischen Element 48 aufgebrachten Verschiebekraft 58 zurück schiebt, ist erfindungsgemäß die Reibkraft 56 größer als die maximal auftretende Hangabtriebskraft 54 bei maximaler Axialbelastung der Welle 18. Daraus resultiert mathematisch, dass der Tangens des Neigungswinkels 40 kleiner ist als der Reibungskoeffizient, der der Reibungskraft 56 entspricht. Der Reibungskoeffizient wird hierbei im Wesentlichen durch die Materialauswahl und die Oberflächenbeschaffenheit der gegeneinander verschiebbaren Flächen bestimmt.

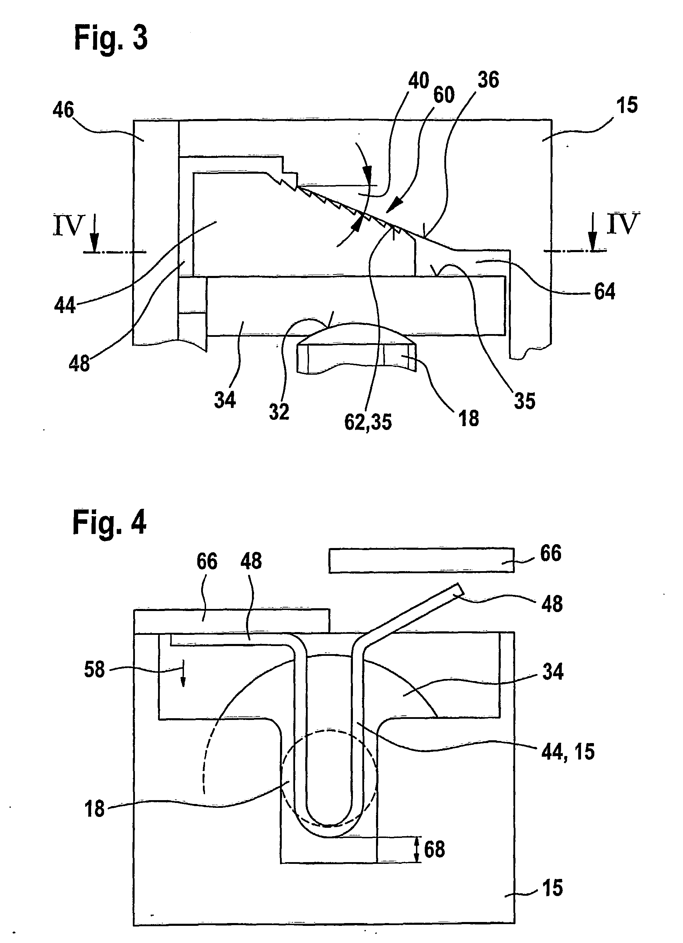

In Figur 3 ist ein Bauteil 44 dargestellt, bei dem der Reibungskoeffizient durch ein Sägezahnprofil 60 an einer Reibfläche 62 zwischen dem Bauteil 44 und der schrägen Anschlagsfläche 36 vergrößert ist. Hier ist das sägezahnähnliches Profil 60 am Bauelement angeformt, kann aber eben so gut an der schrägen Anlauffläche 36 des Gehäuses 15 oder der Anschlagsfläche 35 angeordnet sein. Das Sägezahnprofil 60 ist so geformt, dass das keilförmige Bauteil 44 mit geringerer Verschiebekraft 58 des elastischen Elements 48 senkrecht zur Welle 18 hin verschoben werden kann, als dieses durch die Hangabtriebskraft 54 zurück gepresst wird. Nimmt das Axialspiel beispielsweise aufgrund der Abnutzung der Anlaufscheibe 34 weiter zu, wird das Bauelement 44 aufgrund der Federkraft 58, mit der sich das elastische Element 48 gegenüber dem Gehäuseteil 46 abstützt, weiter in den Spalt 64 zwischen der Anschlagsfläche 35 der Anlaufscheibe 34 und der schrägen Anschlagsfläche 36 des Gehäuses 15 hinein geschoben.

Figur 4 zeigt ein weiteres Ausführungsbeispiel in einer Darstellung gemäß dem Schnitt IV-IV in Figur 3. Das Bauteil 44 ist U-förmig ausgebildet, wobei hier beide Schenkel gegenüber der Stirnfläche 32 der Welle 18 angeordnet sind. Das elastischen Element 48 ist einteilig als integraler Bestandteil das Bauteils 44 ausgebildet, wobei das einstückige Bauteil 44 beispielsweise aus einem Stahlblech ausgestanzt ist. Bei der Montage wird das Bauteil 44 in den Spalt 64 zwischen der Anlaufscheibe 34 und der geneigten Anschlagsfläche 36 gesteckt und die elastischen Elemente 48 mit der Befestigung eines Deckels 66 des Gehäuses 15 vorgespannt. Die rechte Bildhälfte zeigt die Vorrichtung 10 vor der Montage des Deckels 66, die linke Bildhälfte nach erfolgter Montage des Deckels 66. Das Bauteil 44 wird dabei mit der Kraft 58 des elastischen Elements 48 radial zur Welle 18 hin gedrückt. Für einen weiteren Ausgleich des Längsspiels steht dem Bauelement 44 ein freier Verschiebeweg 68 zur Verfügung, um den das Bauteil 44 nachgeschoben werden kann.

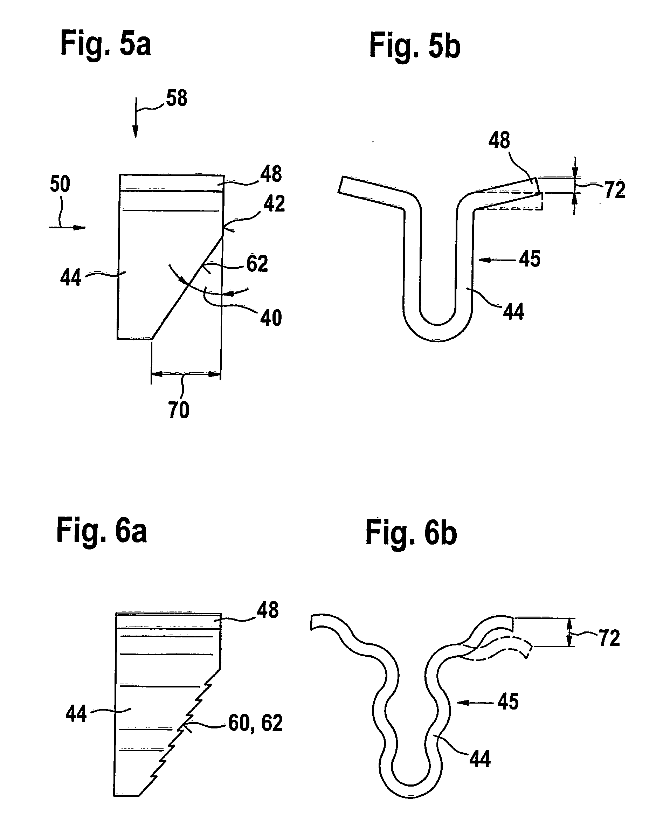

In Figur 5a und 5b ist das Bauteil 44 aus Figur 4 nochmals in der Seitenansicht und in der Draufsicht dargestellt, die Reibfläche 62 des Bauteils 44 ist um denselben Neigungswinkel 40 gegenüber der Ebene 42 angeordnet, wie die korespendierende Anschlagsfläche 36 des Gehäuses 15. Der Neigungswinkel 40 und die Gesamtlänge des Bauteils 44 legen einen maximalen Hub 70 fest, um den das Wellenlängsspiel maximal ausgeglichen werden kann. In Figur 5b ist ein maximaler Federweg 72 dargestellt, um den das elastische Element 48 durch das Gehäuseteil 46 bei der Montage vorgespannt werden kann. Aus diesem Weg 73 resultiert die Kraft 58, mit der das elastische Element 48 das Bauteil 44 in den Spalt 64 drückt.

Die Figuren 6a und 6b zeigen eine Variation des Bauteils 44 aus Figur 5a und 5b, wobei hier an die Reibfläche 62 des keilförmigen Bauteils 44 ein Sägezahnprofil 60 angeformt ist. Das U-förmige Bauteil 44 ist hierbei wellenförmig ausgebildet, wie in Figur 6b ersichtlich ist, um höhere Axialkräfte 50 aufnehmen zu können. Der maximale Federweg 72 des elastischen Elements 48 ist in diesem Beispiel größer, wodurch das Bauteil 44 mit höherer Kraft 58 gegen die Längsachse 30 gedrückt wird.

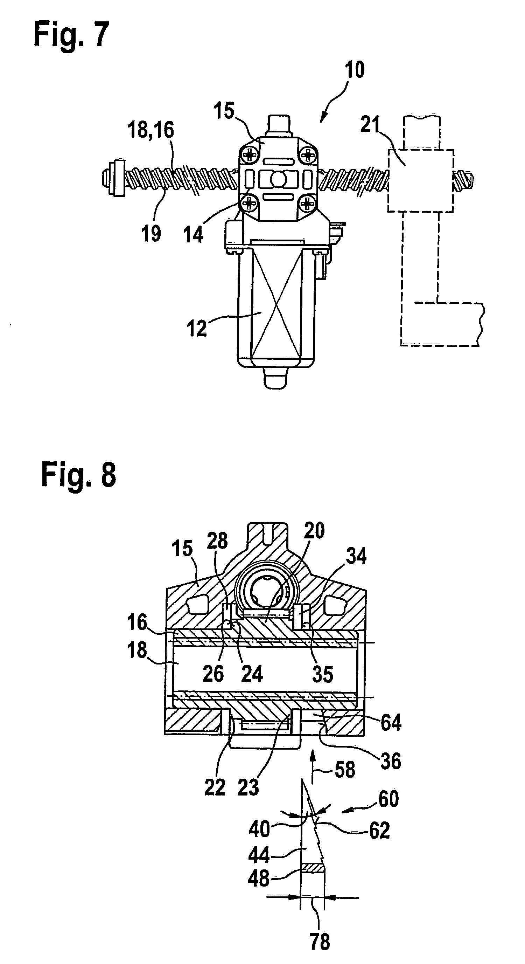

In Figur 7 ist als weiteres Ausführungsbeispiel einer Getriebe-Antriebseinheit 10 ein durchtauchender Spindelmotor dargestellt, dessen Welle 18 nicht an deren Stirnflächen 32 am Ende der Welle 18 gelagert werden kann. Ein Elektromotor 12 treibt hier über eine Schnecke der Ankerwelle ein Schneckenrad 20 an, das drehfest auf der Welle 18 gelagert ist. Da die als Spindel 16 ausgeformte Welle 18 zu beiden Seiten des Schneckenrads 20 aus dem Getriebegehäuse 15 ragt, wird die Welle 18 axial über zwei ringförmige Anlaufflächen 24 axial gelagert.

Dies ist in einem Schnitt durch das Getriebegehäuse 15 in Figur 8 dargestellt. Das Schneckenrad 20 der Welle 18 weist auf der einen Seite einen Bund 22 auf, der eine Anlauffläche 24 bildet, die mit der Anlauffläche 26 einer Anlaufscheibe 28 anliegt, die sich wiederum am Getriebegehäuse 15 abstützt. Auf der axial gegenüber liegenden Seite des Schneckenrads 20 weist dieses ebenfalls einen Bund 23 auf, mit dem sich die Welle 18 auch auf dieser Seite an einer Anlaufscheibe 34 abstützt. Für den Axialspielausgleich ist in diesem Ausführungsbeispiel eine gegenüber der Ebene 42 um den Neigungswinkel 40 geneigte Anschlagsfläche 36 angeformt, die von der Welle 18 durchsetzt wird. Zwischen der Anschlagsfläche 35 der Anlaufscheibe 34 und der geneigten Anlaufsfläche 36 des Getriebegehäuses 15 wird hier ein keilförmiges Bauteil 44 senkrecht zur Welle 18 eingeschoben, um das fertigungs- und betriebsbedingte Axialspiel zwischen Welle 18 und Gehäuse 15 auszugleichen. Das Bauteil 44 weist einen Keilwinkel 40 auf, der dem Neigungswinkel 40 der geneigten Anschlagsfläche 36 entspricht. An der Reibfläche 62 zur Anschlagsfläche 36 hin sind scharfe Kanten 61 angeformt, die einem Sägezahnprofil 60 entsprechen. Das Bauteil 44 wird mit einer Kraft 58 in den Spalt 64 zwischen der Anlaufscheibe 34 und der Anschlagsfläche 36 gedrückt, die von dem vorgespannten elastischen Element 48 erzeugt wird. Das Bauteil 44 kann in diesem Fall nicht flächig ausgeführt sein, wie dies bei einer Lagerung der Welle 18 über deren Stirnfläche 32 möglich ist, sondern das Bauteil 44 ist U- oder bogenförmig ausgebildet, um die Welle 18 zu umgreifen.

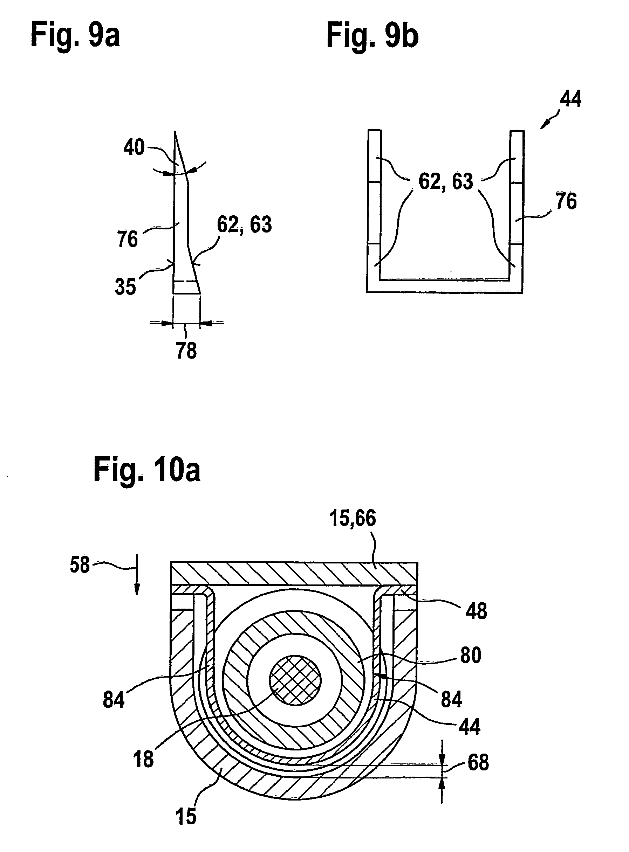

Eine Variation des U-förmigen Bauteils 44 ist in der Figur 9a und Figur 9b in der Seiten- und Draufsicht dargestellt. Die Reibfläche 62, die hier als glatte Fläche 63 ausgebildet ist; ist in der Seitenansicht in zwei versetzte Bereiche unterteilt, die durch eine Fläche 76 verbunden ist, die parallel zur Ebene 42 verläuft. Bei dieser Ausführung weist die korespendierende Anschlagsfläche 36 ein entsprechendes abgestuftes Keilprofil auf. Dabei kann die Bauhöhe 78 des Bauteils 44 reduziert werden, ohne dass dadurch der Neigungswinkel 40 reduziert wird. Figur 9b zeigt das Bauteil 44 in der Draufsicht mit den partiellen Reibflächen 62 und den Zwischenflächen 76, die parallel zur Ebene 42 verlaufen. Das Gehäuses 15 - oder alternativ auch die näherungsweise quadratische Anlaufscheibe 34 - muss im Bereich der U-förmig angeformten Reibfläche 62 eine entsprechend geneigte Anschlagsfläche 36 aufweisen. Wesentlich ist, das eine der beiden Anschlagsflächen 35 oder 36 entsprechend dem Keilwinkel 40 des Bauteils geneigt ist. In einer Variation ist das Bauteil als zweiseitiger Keil ausgebildet und die beiden Anschlagsflächen 35, 36 sind jeweils um den einen Winkelanteil geneigt.

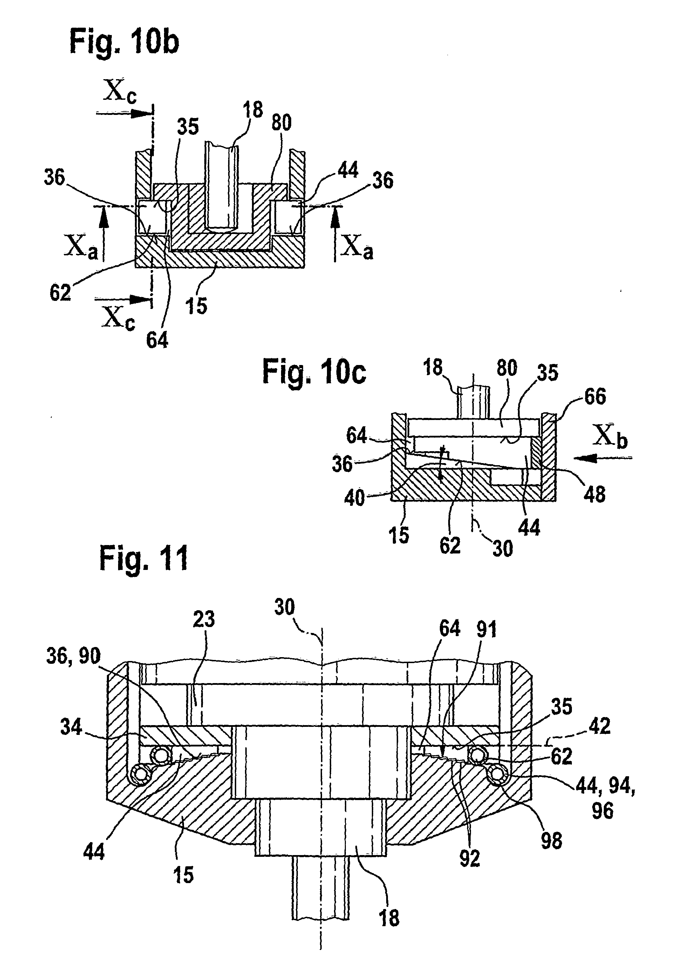

In den Figuren 10a bis 10c ist ein weiteres Ausführungsbeispiel dargestellt, bei dem eine Welle 18 an deren Stirnfläche 32 in einer Anlaufhülse 80 axial gelagert ist. An der Anlaufhülse 80 ist wieder eine ringförmige Anschlagsfläche 35 angeformt, die an dem bogenförmig ausgeführten, die Anlaufhülse 80 umgreifenden Bauteil 44 anliegt. Das Bauteil 44 stützt sich andererseits über die Reibfläche 62 an der um den Neigungswinkel 40 geneigten Anschlagsfläche 36 ab.

Das Bauteil 44 ist wieder einteilig mit dem elastischen Element 48 ausgebildet, das sich an einem Deckel 66 des Getriebegehäuses 15 abstützt. Das einstückige Bauteil 44 ist ähnlich wie in Figur 5a und b als Blattfeder 45 gefertigt, wobei diese insbesondere in den Bereichen 84 in Einschubrichtung keilförmig ausgebildet ist. Für den Ausgleich des während der Betriebszeit auftretenden Längsspiels steht für das Bauteil 44 ein Verschiebeweg 68 zur Verfügung, um den dieses durch die Federkraft 58 des elastischen Bauteils 48 in den Spalt 64 nachgeschoben werden kann.

Figur 11 zeigt ein weiteres Ausführungsbeispiel, bei dem die geneigte Anschlagsfläche 36 als Konus 90 ausgebildet ist. Die Welle 18 weist einen Bund 23 auf, der an einer ringförmigen Anlaufscheibe 34 anliegt. Die geneigte Anschlagsfläche 36 ist hier nicht als plane Ebene, sondern radialsymmetrisch als Kegelstumpf-Mantelfläche 90 ausgebildet, die mit der Ebene 42 den Neigungswinkel 40 bildet. In der Mitte dieses Konus 90 wird die Anschlagsfläche 36 von der Welle 18 durchsetzt, so dass dieses Ausführungsbeispiel auch für eine durchtauchende Spindel 16 geeignet ist. Die konusförmige Anschlagsfläche 36 weist hierbei ein treppenstufenförmiges Profil 91 auf, so dass die einzelnen Ringflächen 92 in etwa parallel zur Ebene 42 verlaufen. Zwischen der Anschlagsfläche 35 der Anlaufscheibe 34 und der konischen Anschlagsfläche 36 ist als Bauteil 44 ein elastisches Ringelement 94 angeordnet, über das sich die Welle 18 am Gehäuse 15 abstützt. Das elastische Ringelement 94 besteht beispielsweise aus einer zusammengesteckten Spiralfeder 96, die unter Vorspannung im Getriebegehäuse 15 in einer Ruheposition 98 montiert wird. Die Ringfeder 96 spannt sich, sobald sie aus ihrer Ruheposition 98 in den Spalt 64 zwischen den beiden Anschlagsflächen 36 und 35 geschoben wird und zieht sich so weit zusammen, bis das Axialspiel ausgeglichen ist. Nimmt das Axialspiel beispielsweise aufgrund von Verschleiß zu, so kann sich die Spiralfeder 96 weiter radial im Spalt 64 zusammen ziehen. Aufgrund der angeformten ringförmigen Stufen 92 wird verhindert, dass beim Einwirken einer Axialkraft 50 von der Welle 18 auf das Bauteil 44 dieses aus dem Spalt 64 radial von der Längsachse 30 weg zurück gedrängt wird, da aufgrund der parallelen Ausrichtung der Ringflächen 92 zur Anlaufscheibe 34 keine Hangabtriebskraft 54 resultiert. Hierbei ist die Reibbedingung, dass der Reibungskoeffizient größer sein soll als der Tangens des Neigungswinkels 40 der konischen Fläche 36 durch das stufenförmige Profil gewährleistet. In einer alternativen Ausgestaltung weist die als Konus 90 ausgebildete Anschlagsfläche 36 eine glatte Fläche 63 auf, und das Bauteil 44 ist zumindest an dessen Oberfläche aus einem Material gefertigt, das in Verbindung mit der Oberfläche des Konus 90 einen hohen Reibungskoeffizienten ergibt. Bei der Ausführung gemäß Figur 11 ist auch kein separates elastisches Element 48 notwendig, das sich an einem Gehäuseteil 46 abstützt, sondern durch die elastische Ausführung des Bauteils 44 als Ringfeder 94 wird die Verschiebekraft 58 durch die radiale Vorspannung des elastischen Ringelements 94 aufgebracht.

In einer weiteren Variation dieses Ausführungsbeispiels befinden sich anstelle des elastischen Ringelements 94 mehrere keilförmige Bauteile 44 in dem Spalt 64 zwischen dem stufenförmigen Konus 90 und der Anschlagsfläche 35 der Anlaufscheibe 34. Die Bauteile 44 sind hierbei vorzugsweise als Kreisringsegmente ausgebildet, deren Reibefläche 62 ebenfalls stufenförmige Ringflächen-Segmente aufweisen, die näherungsweise parallel den Ringflächen 92 des Konus bzw. zur Ebene 42 verlaufen. Diese Bauteile werden mittels elastischer Elemente 48 in den Spalt 64 gedrückt, die sich beispielsweise entweder am Getriebegehäuse 15 abstützten. Alternativ ist um die Bauteile 44 an deren radialen Außenfläche eine Ringfeder 96 angeordnet, die beim Zusammenziehen eine radiale Verschiebekraft 58 auf die keilförmigen, gestuften Bauteile 44 ausübt.

Die erfindungsgemäße axiale Krafterzeugungsvorrichtung findet bevorzugt Anwendung bei durchtauchenden Spindelantrieben, kann aber genauso für die Lagerung von Ankerwellen mit beliebigen Abtriebselementen oder sonstigen Getriebebauteilen verwendet werden. Des weiteren umfasst die Erfindung auch einzelne Merkmale der Ausführungsbeispiele öder eine beliebige Kombination der Merkmale von unterschiedlichen Ausführungsbeispielen.

## Patentansprüche

1. Getriebe-Antriebseinheit (10) - insbesondere zum Verstellen von beweglichen Teilen im Kraftfahrzeug - mit einem Getriebegehäuse (15) und einer in diesem entlang einer Längsachse (30) gelagerten Welle (18), die sich über eine axiale Anschlagsfläche (35) an einer Gegenanschlagsfläche (36) am Gehäuse abstützt, wobei zur Erzeugung einer Axialkraft mindestens eine der Anschlagsflächen (35, 36) um einen Neigungswinkel (40) gegen eine Ebene (42) senkrecht zur Längsachse (30) geneigt ist und ein Bauteil (44), das mit mindestens einer der Anschlagsflächen (35, 36) zusammenwirkt, senkrecht zur Längsachse (30) verschiebbar angeordnet ist, und das Bauteil (44) mittels eines vorgespannten elastischen Elements (48) radial zur Längsachse (30) verschiebbar ist, wobei der Reibungskoeffizient zwischen der mindestens einen Anschlagsfläche (35, 36) und dem Bauteil (44) für eine Bewegung zur Axialkrafterniedrigung größer ist als der Tangens des Neigungswinkels (40), **dadurch gekennzeichnet, dass** das elastische Element (48) als integraler Bestandteil des Bauteils (44) mit diesem zusammen als Biege-Stanzteil ausgebildet ist.

2. Getriebe-Antriebseinheit (10) nach Anspruch 1, **dadurch gekennzeichnet, dass** mindestens eine der Anschlagsflächen (35, 36) und/oder das Bauteil (44) eine profilierte Oberfläche (62) - insbesondere ein sägezahnähnliches Profil (62) - aufweist.

3. Getriebe-Antriebseinheit (10) nach einem der Ansprüche 1 oder 2, **dadurch gekennzeichnet, dass** mindestens eine der Anschlagsflächen (35, 36) und/oder das Bauteil (44) ein treppenstufenähnliches Profil (91) aufweist.

4. Getriebe-Antriebseinheit (10) nach einem der Ansprüche 1 bis 3, **dadurch gekennzeichnet, dass** mindestens eine der Anschlagsflächen (35, 36) konusförmig - insbesondere mit ringförmigen Treppenstufen (92) - ausgebildet ist.

5. Getriebe-Antriebseinheit (10) nach einem der Ansprüche 1 bis 4, **dadurch gekennzeichnet, dass** das Bauteil (44) einteilig mit der einer Anschlagsflächen (35, 36) - insbesondere als Anlaufelement (34) - ausgebildet ist.

6. Getriebe-Antriebseinheit (10) nach einem der vorhergehenden Ansprüche, **dadurch gekennzeichnet, dass** das Bauteil (44) u-förmig ausgebildet ist, und insbesondere die Welle (18) oder eine Anlaufhülse (70) der Welle (18) umgreift.

7. Getriebe-Antriebseinheit (10) nach einem der vorhergehenden Ansprüche, **dadurch gekennzeichnet, dass** das Bauteil (44) ein elastisches Ringelement (94, 96) ist, das radial zusammenziehbar ausgebildet ist.

8. Getriebe-Antriebseinheit (10) nach einem der vorhergehenden Ansprüche, **dadurch gekennzeichnet, dass** das Bauteil (44) als 2-stufiger Keil ausgebildet ist.

9. Getriebe-Antriebseinheit (10) nach einem der vorhergehenden Ansprüche, **dadurch gekennzeichnet, dass** die Welle (18) eine Stirnfläche (32) und/oder mindestens einen Bund (22, 23) aufweist, mit dem sich die Welle (18) über das Bauteil (44) am Getriebegehäuse (15) abstützt.

10. Getriebe-Antriebseinheit (10) nach einem der vorhergehenden Ansprüche, **dadurch gekennzeichnet, dass** die Welle (18) eine Schnecken- oder Gewindeverzahnung (19) aufweist, und insbesondere in ein Innengewinde (21) einer Spindelantriebs-Vorrichtung (10) greift.

11. Getriebe-Antriebseinheit (10) nach Anspruch 1, **dadurch gekennzeichnet, dass** sich das elastische Element (48) an einem Deckel (66) des Getriebegehäuses (15) abstützt.

12. Getriebe-Antriebseinheit (10) nach einem der Ansprüche 1 oder 11, **dadurch gekennzeichnet, dass** das elastische Element (48) einteilig mit dem Deckel (66) ausgebildet ist.

13. Getriebe-Antriebseinheit (10) nach einem der Ansprüche 1, 11 oder 12, **dadurch gekennzeichnet, dass** das Bauteil (44) zusammen mit dem elastischen Element (48) als keilförmige, gewellte Blattfeder (45) ausgebildet ist.

## Claims

1. Gearing drive unit (10) - in particular for adjusting moveable parts in a motor vehicle - having a gearing housing (15) and a shaft (18) which is mounted in said gearing housing (15) along a longitudinal axis (30), said shaft (18) being supported, by means of an axial stop face (35), on a mating stop face (36) on the housing, wherein in order to generate an axial force, at least one of the stop faces (35, 36) is inclined at an angle of inclination (40) relative to a plane (42) perpendicular to the longitudinal axis (30), and a component (44) which interacts with at least one of the stop faces (35, 36) is arranged so as to be displaceable perpendicular to the longitudinal axis (30), and the component (44) can be displaced radially with respect to the longitudinal axis (30) by means of a pre-stressed elastic element (48), wherein the coefficient of friction between the at least one stop face (35, 36) and the component (44) for a movement in order to reduce axial force is greater than the tangent of the angle of inclination (40), **characterized in that** the elastic element (48) is formed, as an integral constituent of the component (44), together with the latter as a bent punched part.

2. Gearing drive unit (10) according to Claim 1, **characterized in that** at least one of the stop faces (35, 36) and/or the component (44) has a profiled surface (62) - in particular a saw-toothlike profile (62).

3. Gearing drive unit (10) according to one of Claims 1 or 2, **characterized in that** at least one of the stop faces (35, 36) and/or the component (44) has a step-like profile (91).

4. Gearing drive unit (10) according to one of Claims 1 to 3, **characterized in that** at least one of the stop faces (35, 36) is conical - in particular with annular steps (92).

5. Gearing drive unit (10) according to one of Claims 1 to 4, **characterized in that** the component (44) is formed in one piece with one of the stop faces (35, 36) - in particular as a stop element (34).

6. Gearing drive unit (10) according to one of the preceding claims, **characterized in that** the component (44) is u-shaped, and in particular engages around the shaft (18) or a stop sleeve (80) of the shaft (18).

7. Gearing drive unit (10) according to one of the preceding claims, **characterized in that** the component (44) is an elastic annular element (94, 96) which is radially contractible.

8. Gearing drive unit (10) according to one of the preceding claims, **characterized in that** the component (44) is formed as a two-stepped wedge.

9. Gearing drive unit (10) according to one of the preceding claims, **characterized in that** the shaft (18) has an end face (32) and/or at least one collar (22, 23), by means of which the shaft (18) is supported on the gearing housing (15) via the component (44).

10. Gearing drive unit (10) according to one of the preceding claims, **characterized in that** the shaft (18) has a worm or thread toothing (19), and in particular engages into an inner thread (21) of a spindle drive device (10).

11. Gearing drive unit (10) according to Claim 1, **characterized in that** the elastic element (48) is supported on a cover (66) of the gearing housing (15).

12. Gearing drive unit (10) according to one of Claims 1 or 11, **characterized in that** the elastic element (48) is formed in one piece with the cover (66).

13. Gearing drive unit (10) according to one of claims 1, 11, or 12, **characterized in that** the component (44) is formed together with the elastic element (48) as a wedge-shaped, corrugated leaf spring (45).

## Revendications

1. Unité d'entraînement de boîte de vitesses (10) - en particulier pour déplacer des pièces mobiles dans un véhicule automobile - comportant un carter de boîte (15) et un arbre (18), positionné dans celui-ci le long d'un axe longitudinal (30), lequel arbre s'appuie sur une face de contrebutée (36) du carter par l'intermédiaire d'une face de butée axiale (35), au moins l'une des faces de butée (35, 36) étant inclinée selon un angle d'inclinaison (40) contre un plan (42) perpendiculaire à l'axe longitudinal (30) pour produire une force axiale, alors qu'un composant (44) coopérant avec au moins l'une des faces de butée (35, 36) est mobile perpendiculairement à l'axe longitudinal (30) le composant (44) étant mobile radialement à l'axe longitudinal (30) au moyen d'un élément élastique précontraint (48), le coefficient de frottement entre au moins une face de butée (35, 36) et le composant (44) étant plus important pour un mouvement destiné à la diminution de la force axiale que la tangente de l'angle d'inclinaison (40),
**caractérisé en ce que**
l'élément élastique (48) est un constituant intégral du composant (44) qui forme avec celui-ci une pièce découpée flexible.

2. Unité d'entraînement de boîte de vitesses (10) selon la revendication 1,
**caractérisée en ce qu'**
au moins l'une des faces de butée (35, 36) et/ou le composant (44) présentent une surface profilée (62) - en particulier un profilé (62) similaire à des dents de scie.

3. Unité d'entraînement de boîte de vitesses (10) selon l'une quelconque des revendications 1 ou 2,
**caractérisée en ce qu'**
au moins l'une des faces de butée (35, 36) et/ou le composant (44) présente un profilé (91) similaire à des marches d'escalier.

4. Unité d'entraînement de boîte de vitesses (10) selon l'une quelconque des revendications 1 à 3,
**caractérisée en ce qu'**
au moins l'une des faces de butée (35, 36) est conique - en particulier avec des marches d'escalier annulaires (92).

5. Unité d'entraînement de boîte de vitesses (10) selon l'une quelconque des revendications 1 à 4,
**caractérisée en ce que**
le composant (44) forme une seule pièce avec l'une des faces de butée (35, 36) - en particulier en tant qu'élément de démarrage (34).

6. Unité d'entraînement de boîte de vitesses (10) selon l'une quelconque des revendications précédentes,
**caractérisée en ce que**
le composant (44) a la forme d'un U et enveloppe en particulier l'arbre (18) ou un manchon de démarrage (70) de l'arbre (18).

7. Unité d'entraînement de boîte de vitesses (10) selon l'une quelconque des revendications précédentes,
**caractérisée en ce que**
le composant (44) est un élément annulaire élastique (94, 96) qui peut être compressé radialement.

8. Unité d'entraînement de boîte de vitesses (10) selon l'une quelconque des revendications précédentes,
**caractérisée en ce que**
le composant (44) est un coin à 2 niveaux.

9. Unité d'entraînement de boîte de vitesses (10) selon l'une quelconque des revendications précédentes,
**caractérisée en ce que**
l'arbre (18) présente une face avant (32) et/ou au moins une collerette (22, 23) avec laquelle l'arbre s'appuie contre le carter de boîte (15) par l'intermédiaire du composant (44).

10. Unité d'entraînement de boîte de vitesses (10) selon l'une quelconque des revendications précédentes,
**caractérisée en ce que**
l'arbre (18) présente une denture hélicoïdale ou filetée (19) et s'enclenche en particulier dans un filetage intérieur (21) d'un dispositif d'entraînement de broche (10).

11. Unité d'entraînement de boîte de vitesses (10) selon la revendication 1,
**caractérisée en ce que**
l'élément élastique (48) s'appuie sur un couvercle (66) du carter de boîte (15).

12. Unité d'entraînement de boîte de vitesses (10) selon la revendication 1 ou 11,
**caractérisée en ce que**
l'élément élastique (48) forme une seule pièce avec le couvercle (66).

13. Unité d'entraînement de boîte de vitesses (10) selon l'une quelconque des revendications 1, 11, ou 12,
**caractérisée en ce que**
le composant (44) est configuré, avec l'élément élastique (48), en forme de ressort à lame (45) ondulé en forme de coin.
